(19) **Europäisches Patentamt / European Patent Office / Office européen des brevets**

(11) **EP 3 054 322 B1**

(12) # EUROPEAN PATENT SPECIFICATION

(45) Date of publication and mention
of the grant of the patent:
**31.10.2018 Bulletin 2018/44**

(21) Application number: **14848370.4**

(22) Date of filing: **29.09.2014**

(51) Int Cl.:
***G02B 1/04*** (2006.01)

(86) International application number:
**PCT/KR2014/009137**

(87) International publication number:
**WO 2015/047005 (02.04.2015 Gazette 2015/13)**

(54) **RESIN COMPOSITION FOR OPTICAL FILM, OPTICAL FILM FORMED USING SAME, AND POLARIZING PLATE AND IMAGE DISPLAY DEVICE COMPRISING SAME**

HARZZUSAMMENSETZUNG FÜR EINEN OPTISCHEN FILM, OPTISCHER FILM DAMIT SOWIE POLARISATIONSPLATTE UND BILDANZEIGEVORRICHTUNG DAMIT

COMPOSITION DE RÉSINE POUR FILM OPTIQUE, FILM OPTIQUE FORMÉ À PARTIR DE CETTE COMPOSITION, ET PLAQUE DE POLARISATION ET DISPOSITIF D'AFFICHAGE D'IMAGE LA COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2013 KR 20130117048**
**17.09.2014 KR 20140123606**

(43) Date of publication of application:
**10.08.2016 Bulletin 2016/32**

(73) Proprietors:
• **LG Chem, Ltd.**
**Seoul 150-721 (KR)**
• **LG MMA Corp.**
**Yeosu-si, Jeollanam-do 555-805 (KR)**

(72) Inventors:
• **UM, Jun-Geun**
**Daejeon 305-738 (KR)**
• **PARK, Sung-Il**
**Daejeon 305-738 (KR)**
• **JEON, Seong-Jang**
**Daejeon 305-738 (KR)**
• **LEE, Nam-Jeong**
**Daejeon 305-738 (KR)**
• **PARK, Sei-Jung**
**Daejeon 305-738 (KR)**
• **PARK, Tae-Sung**
**Daejeon 305-759 (KR)**
• **KIM, Cheol-Ho**
**Daejeon 305-738 (KR)**
• **JEON, Eun-Jin**
**Daejeon 305-738 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2009/112425      JP-A- H0 991 753**
**JP-A- 2012 082 358      JP-A- 2013 148 655**
**JP-B2- 3 648 271        KR-A- 20120 040 964**
**US-A- 4 826 937         US-A1- 2010 296 031**

**Description**

[Technical Field]

The present invention relates to an optical film formed by using a resin composition.

[Background Art]

Due to the recent development of optical technology, various displays which may substitute for conventional cathode-ray tubes (CRT), such as a plasma display panel (PDP), a liquid crystal display (LCD), an organic EL display (LED) or the like are proposed and commercially available. Further, such display devices employ various polymeric films such as a polarizing film, a protective film for a polarizer, a retardation film, a light guide plate, a plastic substrate or the like, and such polymeric materials for a display are on a trend that their required properties are being much more heightened.

In recent, the most widely used polymeric film for a display is TAC film (triacetyl cellulose film), which is employed as a protective film for a polarizing plate or the like, but TAC film has problems that, when used for long time in a high-temperature or high-moisture atmosphere, the polarization degree is decreased, the polarizer and the film are peeled off, or the optical properties are deteriorated. In order to solve such problems, polymeric films including polystyrene, acryl such as methyl methacrylate or polycarbonate have been proposed instead of TAC film. Such polymeric films have an advantage that the thermal resistance is good. However, polystyrene or polycarbonate films have problems that the aromatic ring present in the polymer causes a double refraction when it is oriented to affect optical properties, and methyl methacrylate film has a problem that, although the retardant value of methyl methacrylate is relatively small in comparison with polystyrene and polycarbonate, the retardant value of methyl methacrylate is not sufficient, and thus it may not be applied to an optical material such as a liquid crystal display which needs a high precision.

In order to solve such problems, proposed is a method of copolymerizing or blending a monomer or polymer to provide a polymeric material having a good thermal resistance as well as a low retardant value. For example, proposed is a method of employing a maleimide-based monomer in order to obtain a resin composition having a good thermal resistance and the frequency to employ cyclohexylmaleimide is really increased. Particularly, as a conventional thermal resistant resin, a copolymer including methyl methacrylate, cyclohexylmaleimide and alpha-methylstyrene has been mainly used. However, the environmental regulation restricts the use of cyclohexylmaleimide. Particularly, when extruding the resin composition to a film, the residual cyclohexylmaleimide in the resin generates irritant and harmful odors, which will reduce the productivity and make the processes unstable.

[Disclosure]

[Technical Problem]

In order to solve the problems described as above, the present invention is to provide an optical film which may suppress any odors which may be generated when extruding a conventional resin composition to a film and may improve the thermal stability.

[Technical Solution]

The present invention is to provide an optical film prepared from a resin composition comprising a copolymer formed by polymerizing an alkyl methacrylate-based monomer, a styrene-based monomer, a phenylmaleimide-based monomer and an alkyl acrylate-based monomer, and polycarbonate.
Further, the resin composition contains the residual unreacted phenylmaleimide-based monomer preferably in a content of 30 ppm or less, based on total weight of the composition.
In addition, it is preferable for the copolymer to contain 70 to 98 parts by weight of alkyl methacrylate-based monomer, 0.1 to 10 parts by weight of styrene-based monomer, 1 to 15 parts by weight of phenylmaleimide-based monomer, and 0.1 to 5 parts by weight of alkyl acrylate-based monomer based on 100 parts by weight of the copolymer.
Further, it is preferable that the weight ratio of phenylmaleimide-based monomer and alkyl acrylate-based monomer is in the range of 2:1 to 7:1.
Meanwhile, it is preferable that the resin composition for optical film has a glass transition temperature of 100°C to 150°C, and a 2% weight loss temperature of 280°C or higher when measured with a thermogravimetric analyzer (TGA).
In another aspect, the present invention provides a polarizing plate comprising the optical film and an image display device comprising the same.

[Advantageous Effects]

The optical film according to the present invention may reduce odors which may be generated during a film extrusion and have a good thermal stability to improve a productivity as well as may provide a film which is excellent in thermal resistance and optical property. Therefore, the optical film formed by using the resin composition and polycarbonate may be employed in various display devices.

[Mode for Disclosure]

In below, preferable embodiments of the present invention will now be described. However, embodiments of the present invention may be modified in many different forms and the scope of the present invention will not be limited to the embodiments set forth herein. In addition, the embodiments of the present invention are provided so as to illustrate the present invention more specifically to persons having ordinary skill in this technology field.

The first aspect of the present invention is to provide an optical film prepared from a resin composition which comprises a copolymer formed by polymerizing an alkyl methacrylate-based monomer, a styrene-based monomer, a phenylmaleimide-based monomer and an alkyl acrylate-based monomer.

In the context of the specification, the term of copolymer means that monomers as mentioned in the specification are polymerized and then contained as repetitive units in the copolymer resin. In the specification, the copolymer may be a block copolymer or a random copolymer, but is not limited thereto. Further, the copolymer is not limited only to a tetra-copolymer formed by polymerizing an alkyl methacrylate-based monomer, a styrene-based monomer, a phenylmaleimide-based monomer and an alkyl acrylate-based monomer, and may additionally contain as comonomer other monomers different from the above-mentioned monomers within a range without departing from the object of the present invention.

In addition, owing to the properties of respective monomers, the retardation feature of the optical film prepared from the monomers may be varied according to the composition of the respective components, the stretching direction, the stretching ratio and the stretching method. In the present invention, therefore, an optical film may be produced by adjusting the composition of the respective components and the stretching method.

In the present invention, the alkyl methacrylate-based monomer is intended to impart an optical property of a high transparency to the resin composition or the film.

The alkyl moiety of the alkyl methacrylate-based monomer may be a substituted or un-substituted alkyl group or cycloalkyl group having preferably 1 ~ 10 carbon atoms, more preferably 1 - 6 carbon atoms, and most preferably, may be methyl group or ethyl group. Specifically, it may be at least one selected from a group consisting of methyl methacrylate, ethyl methacrylate, isopropyl methacrylate, n-butyl methacrylate, t-butyl methacrylate, hydroxyethyl methacrylate, isobornyl methacrylate and cyclohexyl methacrylate, but is not limited thereto.

The content of alkyl methacrylate-based monomer may be preferably in the range of 70 to 98 parts by weight, more preferably in the range of 82 to 97 parts by weight based on 100 parts by weight of copolymer. When the content satisfies the range, an optical film having good optical properties may be obtained and the double refraction property which may happen when stretched may be minimized.

Next, in the present invention, the styrene-based monomer is intended to improve the polymerization efficiency between respective monomers, and thereby, it may be expected to reduce residual monomers contained in a prepared copolymer. Further, since a film prepared from a resin composition in which a styrene-based monomer is contained may be controlled more easily in the view of the stretching retardation, it is possible to provide a zero retardant film having a good double refraction property.

Meanwhile, the styrene-based monomer may be an unsubstituted styrene monomer or a substituted styrene monomer. The substituted styrene monomer may be a styrene substituted on vinyl group or on benzene ring with at least one substituent such as aliphatic hydrocarbons or heteroatoms. For example, it may be at least one selected from a group consisting of styrene, $\alpha$-methylstyrene, 3-methylstyrene, 4-methylstyrene, 2,4-dimethylstyrene, 2,5-dimethylstyrene, 2-methyl-4-chlorostyrene, 2,4,6-trimethylstyrene, cis-$\beta$-methylstyrene, trans-$\beta$-methylstyrene, 4-methyl-$\alpha$-methylstyrene, 4-fluoro-$\alpha$-methylstyrene, 4-chloro-$\alpha$-methylstyrene, 4-bromo-$\alpha$-methylstyrene, 4-t-butylstyrene, 2-fluorostyrene, 3-fluorostyrene, 4-fluorostyrene, 2,4-difluorostyrene, 2,3,4,5,6-pentafluorostyrene, 2-chlorostyrene, 3-chlorostyrene, 4-chlorostyrene, 2,4-dichlorostyrene, 2,6-dichlorostyrene, octachlorostyrene, 2-bromostyrene, 3-bromostyrene, 4-bromostyrene, 2,4-dibromostyrene, $\alpha$-bromostyrene and $\beta$-bromostyrene, but is not limited thereto. More preferably, styrene substituted with $C_{1-4}$ alkyl or halogen may be employed. More specifically, the styrene-based monomer may be at least one selected from a group consisting of styrene, $\alpha$-methylstyrene, p-bromostyrene, p-methylstyrene and p-chlorostyrene, and most preferably, selected from styrene, $\alpha$-methylstyrene and p-methylstyrene.

The content of styrene-based monomer is preferably in the range of 0.1 to 10 parts by weight, more preferably in the range of 0.5 to 5 parts by weight, based on 100 parts by weight of the copolymer. When the content of the styrene-based monomer satisfies the range, it is possible to obtain an effect reducing the residual monomers and an effect increasing the glass transition temperature of the copolymer as well as more preferable effects on the optical characteristics of a film since it is easy to control the stretching retardation of a film.

In the present invention, the phenylmaleimide-based monomer is intended to improve the thermal stability and thermal resistance of a resin composition and a film and to improve the compounding compatibility with polycarbonate resin. In addition, unlike the case employing conventional cyclohexylmaleimide, it is possible to suppress the generation of irritant odor when extruding the resin composition.

Generally, residual maleimide-based monomers may generate irritant odors during the process and be easily solidified to cause an apparent badness when producing an optical film. However, since phenylmaleimide-based monomers have a constant chemical structure owing to the substituted phenyl group unlike cyclohexylmaleimide monomer, they have advantages that it is easy to form a copolymer with alkyl methacrylate-based monomer and styrene-based monomer, that it is possible to improve the thermal stability and that the polymerizing time is relatively short. Thereby, the amount of residual phenylmaleimide-based monomer after forming the copolymer is much lower than a resin containing a cyclohexylmaleimide-based monomer, and any odors generated due to residual monomers during the process may be reduced.

The specific examples of the phenylmaleimide-based monomers may preferably be at least one selected from a group consisting of phenyl maleimide, nitrophenylmaleimide, monochlorophenylmaleimide, dichlorophenylmaleimide, monomethylphenylmaleimide, dimethylphenylmaleimide, and ethylmethylphenylmaleimide.

The content of phenylmaleimide-based monomer is preferably in the range of 1 to 15 parts by weight, more preferably in the range of 2 to 10 parts by weight, based on 100 parts by weight of the copolymer. When the content of phenylmaleimide-based monomer satisfies the range, it is possible to strengthen the thermal resistance of the resin composition or film, to facilitate the mixing with polycarbonate resin and to form a film without being extracted. Meanwhile, in the present invention, alkyl acrylate monomer is intended to impart a polymerization stability and a thermal stability to a resin composition and a toughness to a stretched film. By introducing the structural unit in the copolymer, it is possible to improve a molding processability such as mold releasing ability and the like, to prevent a weight loss due to heat during the process, and thus, to obtain a composition having an excellent thermal resistance.

The alkyl moiety of alkyl acrylate-based monomer may be a substituted or unsubstituted alkyl group or a cycloalkyl group, and have preferably about 1-10 carbon atoms, more preferably 1 to 6 carbon atoms, and most preferably, may be methyl group or ethyl group. Specifically, it may be methyl acrylate, ethyl acrylate, isopropyl acrylate, n-butyl acrylate, t-butyl acrylate, cyclohexyl acrylate, isobornyl acrylate, hydroxymethyl acrylate or hydroxyethyl acrylate, but not restricted to them.

The content of alkyl acrylate-based monomer- is preferably 0.1 to 5 parts by weight, and more preferably 0.5 to 3.0 parts by weight, based on 100 parts by weight of the copolymer. When the content satisfies the range, there is an effect facilitating the polymerization between alkyl methacrylate-based monomer and phenylmaleimide-based monomer during the formation of the copolymer to reduce residual phenylmaleimide in the resin composition, an effect overcoming a thermal decomposition phenomenon which may be occurred in phenylmaleimide during the resin melting process, and an effect imparting a toughness during the film stretching process to facilitate the stretching process.

Meanwhile, the weight ratio of phenylmaleimide-based monomer and alkyl acrylate-based monomer is preferably in the range of 2:1 to 10:1, more preferably in the range of 2:1 to 7:1. When the weight ratio of the two monomers satisfies the range, the residual monomer in the copolymer may be reduced and the stability during residing in the extruder and the polymer filter when processing the film may be improved.

Meanwhile, the content of residual unreacted phenylmaleimide-based monomer in the resin composition is preferably in the range of 30 ppm or less, more preferably in the range of 20 ppm or less, based on the total composition. The inventors of the present invention has studied and found that cyclohexylmaleimide monomer which is commonly employed as monomer in a copolymer constituting conventional thermal resistant resin has a relatively low polymerization degree because the cyclohexyl group may rotate more easily. Therefore, the amount of residual monomers remaining in the resin after polymerizing the copolymer is larger as well as the cyclohexylmaleimide monomer generates irritant and harmful odors to cause problems during the process. Whereas, the phenylmaleimide-based monomer shows a good polymerization degree due to its stabilized aromatic ring in comparison with cyclohexylmaleimide-based monomer, thereby the amount of residual monomers in the copolymer becomes very tiny to improve the process stability.

The polycarbonate is intended to adjust the retardation and added in a content of 0.1 to 10 parts by weight, preferably 1 to 5 parts by weight, based on 100 parts by weight of the total resin composition. When the polycarbonate is contained in an amount less than the range, there is a problem that the thickness direction retardation of a stretched film will increase in the positive direction. When the polycarbonate is contained in an amount exceeding the range, there is a problem that the thickness direction retardation of a stretched film will increase in the negative direction. Further, when the amount of the polycarbonate exceeds 10 parts by weight, there is a problem that the compatibility with acrylic resin composition is decreased to cause a whitening phenomenon. Therefore, by adjusting the content of the monomers within the range, it is possible to adjust both of the absolute value of an in-plane retardation ($R_{in}$) defined by the following [Equation 1] and the absolute value of the thickness-direction retardation ($R_{th}$) defined by the Equation 2 within 5nm or less, preferably within 3nm or less, more preferably to 0, respectively:

$$[\text{Equation 1}] \qquad R_{in} = (n_x - n_y) \times d$$

$$[\text{Equation 2}] \qquad R_{th} = (n_z - n_y) \times d$$

wherein $n_x$ is the highest one among in-plane refractive indexes of the optical film,

$n_y$ is the refractive index of the direction perpendicular to the $n_x$ among the in-plane refractive index of the optical film,
$n_z$ is the thickness-direction refractive index of the optical film, and
d is the thickness of the film.

Meanwhile, a resin composition including an acrylic-based copolymer resin and a polycarbonate resin may be produced by using a well-known method in this technical field, such as, for example, a compounding method.

Further, the resin composition may further contain, if necessary, various additives generally used in this technical field, for example, a lubricant, an antioxidant, a UV stabilizer, a thermostabilizer, or the like. In such a case, the additives may be contained in an appropriate content within a range so as not to affect physical properties of the resin composition, and for example, may be contained in an amount of about 0.1 to 5 parts by weight of the additive based on 100 parts by weight of the total resin composition.

On the other hand, the glass transition temperature of the resin composition may be preferably in the range of about 100 °C to about 150°C, more preferably in the range of about 105 °C to about 140 °C, and most preferably in the range of about 110 °C to about 130 °C. When the glass transition temperature is less than 100°C, the film will lack in thermal resistance and thus may be easily deformed under a condition of high temperature and high humidity, and as a result, the polarizing plate may be deformed to cause an non-uniformity in a liquid crystal panel. When the glass transition temperature is higher than 150°C, the processing property of the resin is severely decreased, and as a result, the formation of film during the extrusion process will be difficult due to its high viscosity to thereby cause the decrease in the productivity.

Meanwhile, the resin composition has an excellent thermal stability. If a resin containing a copolymer comprising alkyl methacrylate is molded at a temperature around 260°C at which an injection molding or an extrusion molding is generally carried out, there may happen a zipper decomposition which is peculiar to a resin containing alkyl methacrylate. It is known that the zipper decomposition starts from the terminal double bond. Whereas, the present invention may decrease the molding defects by suppressing the thermal decomposition at a temperature around 260°C, and realize the production of a stable optical article without deteriorating the color tone. In the present invention, the thermal stability may be evaluated by using a thermogravimetric analyzer (TGA). The thermal stability is determined by increasing the temperature of the resin from 30°C to 500°C at the rate of 10°C/min in nitrogen atmosphere, and measuring the temperature at which a resin loses its weight by 2%. The temperature of 2% weight loss is in the range of preferably 280°C or higher, more preferably 300°C or higher, most preferably 320°C or higher.

Specifically, the optical film according to the present invention may be produced by a method including a step of obtaining a resin composition and a step of molding a film from the resin composition, which may additionally comprise a step of monoaxially or biaxially stretching the film.

When preparing an optical film according to the present invention, it is possible to employ any methods known in this technical field, for example, a solution casting method or an extrusion method, or other methods such as, for example, a melting extrusion molding method. Specifically, a film may be prepared by drying the resin composition under vacuum to remove moisture and dissolved oxygen; supplying the resultant into a single or twin screw extruder wherein the atmosphere in the section from a hopper for raw material to the extruder is substituted with nitrogen; melting the resultant at a high temperature to obtain a crude pellet; drying the crude pellet under vacuum; melting the resultant with a single extruder wherein the atmosphere in the section from a hopper for raw material to the extruder is substituted with nitrogen; passing the resultant through T-die of coat hanger type; and then passing the resultant through a chromium-plated casting roll, a drying roll or the like. At this time, the film-forming temperature may be preferably in the range of 150°C to 350°C, more preferably in the range of 200°C to 300°C. Meanwhile, in case where a film is formed by the T-die method described as above, the film may be obtained in a roll shape by mounting a T-die on the front end of a known single or twin screw extruder and then extruding the resin in a film form and winding the film. At this time, it is possible to mono-axially stretch the film by adequately adjusting the temperature of a winding roll and then stretching the film in the extruding direction. In addition, it is possible to carry out a simultaneously biaxial stretching or a successive biaxial stretching by stretching the film in a direction perpendicular to the extruding direction.

On the other hand, when a stretching process is carried out, a stretching temperature may be preferably around the glass transition temperature of the resin composition which is a raw material of a film, more preferably, in the range of (glass transition temperature - 30°C) to (glass transition temperature + 100°C), most preferably in the range of (glass transition temperature - 20°C) to (glass transition temperature + 80°C). When the stretching temperature is lower than (glass transition temperature - 30°C), there may be a problem that a sufficient stretching magnification will not be obtained. On the contrary to this, when the stretching temperature exceeds (glass transition temperature + 100°C), there may be a problem that a flow of the resin composition will occur to make a stable stretching difficult.

The stretching magnification defined by an area ratio may be preferably in the range of 1.1 to 25 times, more preferably in the range of 1.3 to 10 times. When the stretching magnification is less than 1.1 times, there is a problem that toughness accompanied with the stretching may not be improved. When the stretching magnification exceeds 25 times, there is a problem that an effect to an extent that the stretching magnification was increased may not be obtained.

A stretching speed may be preferably in the range of 10 to 20,000%/min, more preferably in the range of 100 to 10,000%/min. When the stretching speed is less than 10%/min, there is a problem that, in order to obtain a sufficient stretching magnification, a relatively long period of time may be needed to increase the manufacturing cost. When the stretching speed exceeds 20,000%/min, a rupture or the like may occur in a stretched film.

In order to stabilize optical isotropy or mechanical properties of an optical film, the optical film may be subjected to heat treatment (annealing) or the like after the stretching process. A condition of the heat treatment is not particularly limited, and any suitable conditions known in this technical field may be employed.

The optical film formed according to the method by using a resin composition of the present invention may have a thickness of 5 $\mu$m to 200 $\mu$m, but is not limited thereto.

The optical film prepared by using a resin composition described as above may have a thermal expansion coefficient of 50 to 100 ppm/°C, preferably 50 to 80 ppm/°C. When comparing the difference of thermal expansion coefficient, the difference from PVA polarizing film is relatively very small when comparing that from the conventional optical film, thereby a change in a dimension of a polarizing plate may be effectively suppressed when applied to a polarizing plate.

In addition, the optical film may have a light transmittance of 90% or more, and haze characteristics of 0.6% or less, preferably 0.3% or less. When the light transmittance and the haze fall within the ranges, it may be adequately employed as a protective film of a polarizing plate.

Meanwhile, when an optical film is prepared by using a compounding resin of the copolymer and the polycarbonate, the optical film may be usefully employed as a protective film for a polarizing plate since, in the wavelength of 550nm, an absolute value of the in-plane retardation ($R_{in}$) defined by the following [Equation 1] and an absolute value of the thickness-direction retardation ($R_{th}$) defined by the following [Equation 2], respectively, are very small as the range of 5nm or less, preferably 3nm or less:

$$[\text{Equation 1}] \qquad R_{in} = (n_x - n_y) \times d$$

$$[\text{Equation 2}] \qquad R_{th} = (n_z - n_y) \times d$$

wherein, in the Equation 1 and Equation 2,

$n_x$ is the highest one among in-plane refractive indexes of the optical film,
$n_y$ is the refractive index perpendicular to the $n_x$ among in-plane refractive indexes of the optical film, $n_z$ is the thickness-direction refractive index of the optical film, and
d is the thickness of the film.

The last aspect of the present invention relates to a polarizing plate comprising an optical film of the present invention and an image display device comprising the polarizing plate, which may be described more specifically in below.

In the specification of the present invention, a polarizing plate means that it comprises a polarizer and a protective film, and the polarizer may be prepared by using a film composed of polyvinyl alcohol (PVA) containing iodine or dichroic dye. The polarizer may be prepared by dyeing iodine or dichroic dye on a PVA film, and the method of producing the same is not specifically limited.

In addition, a protective film according to the present invention may be provided on one or both sides of a polarizer. When an optical film of the present invention is provided on one side of a polarizer, it is possible to provide on other side a protective film for a polarizer well-known in the technical field, such as, for example TAC film, PET film, COP film, PC film, norbornene-based film or the like. It is particularly preferable to employ TAC film on an economic consideration.

Meanwhile, in the polarizing plate of the present invention, it is possible to adhere the protective film and the polarizer in a method known in the technical field, for example, by using an adhesion method using an adhesive. That is, an adhesive is firstly coated on the surface of a protective film or the surface of a polarizer (a polarizing membrane) of PVA film by using a roll coater, a gravure coater, a bar coater, a knife coater, a capillary coater or the like. Before the adhesive is completely dried, the protective film and the polarizer are hot-pressed or pressed at room temperature with a laminating roll to be laminated. When using a hot-melt adhesive, a hot-press roll should be used.

An adhesive which may be used in the lamination of the protective film and the polarizer may include for example a PVA-based adhesive, a polyurethane-based adhesive, an epoxy-based adhesive, a styrene-butadiene rubber-based (SBR-based) adhesive, a hot-melt type adhesive or the like, but is not limited thereto. When using a polyurethane-based adhesive, it is preferable to employ a polyurethane-based adhesive prepared by using an aliphatic isocyanate-based compound which does not change to yellow by light.

In addition, to facilitate the stacking on a liquid crystal cell or the like, the polarizing plate of the present invention may further include an adhesive layer, which may be disposed on one side or both sides of the polarizing plate. It is preferable for the adhesive layer, after the adhesion thereof, to be sufficiently cured by heat or ultraviolet light and thereby to improve the mechanical strength to a level of an adhesive. Further, since interfacial adhesion strength may also be relatively high to an extent to which delamination does not occur without breakage of any one of both films having adhesive films adhered thereto.

A usable adhesive may have an excellent optical transparency, adequate wetting properties and the adhesive properties including cohesiveness or adhesiveness. Specific example is an adhesive which is appropriately produced by using a base polymer selected from a group consisting of an acrylic-based polymer, a silicon-based polymer, polyester, polyurethane, polyether, synthetic rubber or the like.

Meanwhile, the polarizing plate prepared by using a resin composition has a feature that the occurrence of curl is small. In the present invention, "curl" means the height difference between the center level and the edge level of the sample which may be occurred due to the contortion generated when the polarizing plate sample is placed on a horizontal table at 24°C, 50%RH environment with the concave plane facing upward. If the occurrence of curl increases, outside air flows into the curl parts of the polarizing plate when combining the polarizing plate and the liquid crystal panel by using a adhesive, and thereby the apparent quality of the outside of a liquid crystal panel may be decreased.

In addition, the present invention provides an image display device, preferably a liquid crystal display device including the polarizing plate. For example, the liquid crystal display device according to the present invention is characterized by including a liquid crystal cell and a first polarizing plate and a second polarizing plate provided with both sides of the liquid crystal cell, wherein at least one of the first and second polarizing plates should be a polarizing plate according to the present invention. That is, at least one or two optical films according to the present invention may be provided between the first polarizing plate and the liquid crystal cell, between the second polarizing plate and the liquid crystal cell, or both between the first polarizing plate and the liquid crystal cell and between the second polarizing plate and the liquid crystal cell. The optical film or the protective film for a polarizer which is provided on a side thereof opposite to the liquid crystal cell of the polarizing plate may include a UV absorbent.

In below, the present invention is more specifically illustrated by detailed Examples.

## Examples

<Example 1>

A monomer mixture (1000g) containing methyl methacrylate, alpha-methylstyrene, phenylmaleimide and methyl acrylate in the contents as described in [Table 1] in below is prepared and mixed in a 5-L reactor under stirring at 400rpm with 2,000g of distilled water, 8.4g of 5% polyvinyl alcohol solution (POVAL PVA217; manufactured by Kuraray Co., Ltd), 0.1g of boric acid, 2.5g of n-octyl mercaptan and 1.5g of 2,2'-azobisisobutyronitrile to be dispersed in an aqueous phase to give a suspension.

Then, the suspension is heated to 80°C and subjected to a polymerization reaction for 90 minutes. Thereafter, the suspension is cooled to 30°C, washed with distilled water and dried by removing water to give a resin composition.

Using a twin screw extruder (Diameter 30mm, L/D 40), the resin composition thus obtained as above is blended with polycarbonate (LUPOY 1080DVD, manufactured by LG Chem, Ltd.) and an antioxidant (A060, manufactured by Adeka) under nitrogen atmosphere in the contents as described in Table 1 at the temperature of 265°C to give resin pellets. As for the produced resin, are measured its composition, weight-average molecular weight, glass transition temperature, haze, light transmittance and weight change rate, and further, is also measured its residual maleimide content, which is presumed as the major factor of the odors generated during the film process. The results of the measurement are shown in Table 1.

Thereafter, the resin is extruded to a film having a thickness of $160\mu$m by using a T-die extruder, and then biaxially stretched at a temperature of (glass transition temperature of the film + 10°C) with 2.0 times-fold in MD direction and 2.0 times-fold in TD direction and in a 200mm/min rate to give an optical film having 40$\mu$m thickness. At this time, odors generated during the manufacturing process of the optical film are qualitatively tested and compared. As for the optical film thus produced, are measured its residual retardation, tensile strength and thermal expansion coefficient. The measurement results are shown in Table 1.

<Example 2>

A resin composition is prepared in the same manner as described in Example 1 excepting that methyl methacrylate, alpha-methylstyrene, phenylmaleimide and methyl acrylate are mixed in the contents described in Table 1, in which the measurement result of the physical property is also described.

<Comparison Example 1>

A resin composition is prepared in the same manner as described in Example 1 excepting that methyl methacrylate and phenylmaleimide are mixed in the contents described in Table 1, in which the measurement result of the physical property is also described.

<Comparison Example 2>

A resin composition is prepared in the same manner as described in Example 1 excepting that methyl methacrylate, alpha-methylstyrene and phenylmaleimide are mixed in the contents described in Table 1, in which the measurement result of the physical property is also described.

<Comparison Example 3>

A resin composition is prepared in the same manner as described in Example 1 excepting that methyl methacrylate, phenylmaleimide and methyl acrylate are mixed in the contents described in Table 1, in which the measurement result of the physical property is also described.

<Comparison Example 4>

A resin composition is prepared in the same manner as described in Example 1 excepting that methyl methacrylate and cyclohexylmaleimide are mixed in the contents described in Table 1, in which the measurement result of the physical property is also described.

<Comparison Example 5>

A resin composition is prepared in the same manner as described in Example 1 excepting that methyl methacrylate, alpha-methylstyrene and cyclohexylmaleimide are mixed in the contents described in Table 1, in which the measurement result of the physical property is also described.

<Comparison Example 6>

A resin composition is prepared in the same manner as described in Example 1 excepting that methyl methacrylate, alpha-methylstyrene, cyclohexylmaleimide and methyl acrylate are mixed in the contents described in Table 1, in which the measurement result of the physical property is also described.

<Manufacturing Example - Production of a polarizing plate>

By using optical films of the present invention prepared by the same methods as in Examples 1 to 2 and Comparative Examples 1 to 6, polarizing plates are prepared as follows. At first, a semi-finished product of a polarizing plate is prepared by placing the film on one side of a PVA polarizer having a 25$\mu$m thickness, by placing on another side thereof a TAC film (UZ TAC, manufactured by Fuji) having a 60$\mu$m thickness, by injecting a modified PVA-based aqueous adhesive between them with a press roll, and by pressing with a press roll, and then by drying with a hot air at the temperature of 80°C for 5 minutes. The acrylic film surface of the prepared semi-finished product of a polarizing plate is subjected to a corona treatment under a condition of 50 W/m$^2$.min, is laminated with a polyester-based film having a releasing layer on which a adhesive is coated in a thickness of 20$\mu$m by using a roll laminator, and is further laminated on its opposite TAC film surface with a polyester-based protective film having a adhesive layer to give a finished product of a polarizing plate. The physical properties of the prepared polarizing plate are measured according to the methods described in below. For the semi-finished product, a single transmittance, an across transmittance and a polarization degree of the polarizing plate are measured, and for the finished product, the occurrence of curl in the polarizing plate is measured. The results of the measurement are shown in Table 1.

In the present invention, the methods of evaluating the physical properties are as follows.

1. Weight-average molecular weight: After dissolving the produced resin in tetrahydrofuran, this is measured by using a gel permeation chromatography (GPC),

2. Glass transition temperature (Tg): This is measured with a temperature increasing rate of 10°C/min by using a Differential Scanning Calorimetry (DSC) (DSC823, manufactured by Mettler Toledo Company).

3. Weight change rate: A sample is mounted on a measuring device of TGA (Thermogravimetric analyzer) and the temperature is increased from 30°C to 500°C with a temperature increasing rate of 10°C/min under a nitrogen current to measure the temperature in which the weight loss of 2% is occurred.

4. Measurement of residual maleimide component: The maleimide monomer remaining in the resin after the polymerization is quantitatively measured by a GC (Gas Chromatography) analyzer. More specifically, first, the produced resin pellets are completely dissolved in a constant amount of an organic solvent (chloroform), and then n-hexane solvent is added to extract the dissolved resin component. The supernatant of the resulting solution is taken, analyzed by GC, and compared with the predetermined GC result of monomers used in the copolymer to thereby determine the residual maleimide content remaining in the resin. At this time, the residual maleimide monomer remaining in the resin is the major factor of the odor generated during processing.

5. Retardation (Phase difference): The retardation of the produced film is measured by using a Double Refraction Measurer (Axoscan, Axometrics Company) at the measuring wavelength of 550nm.

6. Haze and light transmittance: These are measured in accordance with ASTM1003.

7. Tensile strength: This is measured according to ASTM D638 by using a Universal Testing Machine (UTM, Zwick).

8. Coefficient of Thermal Expansion (CTE): The coefficient of thermal expansion at the temperature section between 40°C and 80°C is measured by using a Thermomechanical Analyzer (TMA) (SDTA 840, manufactured by Mettler Toledo Company) at the temperature increasing rate of 10°C/min.

9. Optical property of polarizing plate: The polarization degree of an polarizing plate is confirmed by measuring the single transmittance (Ts) and the cross transmittance (Tc) of the polarizing plate by a digital-type Spectro-Polarimeter (P-2000, manufactured by JASCO).

The degree of polarization is defined by the following [Equation 3] in which the parallel transmittance (Tp) is obtained when the absorbance axes of two polarizing plates are arranged in parallel and the cross transmittance (Tc) is obtained when the absorbance axes of two polarizing plates are crossed at 90° each other. Provided that the parallel transmittance may be substituted with the single transmittance.

[Equation 3]

$$\text{Degree of Polarization} = [(Tp - Tc) / (Tp + Tc)]^{1/2}$$

10. Curl measurement: A polarizing plate sample of 200mmX200mm size is placed at 24°C and 50% RH environment on a horizontal table with the concave surface upward. After standing for 1 hour, the heights between the table and the four edges of the sample lifted from the table are measured with a ruler, and the maximum value is defined as the curl amount.

[Table 1]

| Category | | | Example 1 | Example 2 | Comp. Example 1 | Comp Example 2 | Comp Example 3 | Comp Example 4 | Comp Example 5 | Comp Example 6 |
|---|---|---|---|---|---|---|---|---|---|---|
| Composition of the resin (parts by weight) | | MMA | 92 | 93 | 96 | 94 | 95 | 95 | 93 | 92 |
| | | AMS | 2 | 2 | - | 2 | - | - | 2 | 2 |
| | | PMI | 5 | 4 | 4 | 4 | 4 | 5 | - | - |
| | | CHMI | - | - | - | - | - | 5 | 5 | 5 |
| | | MA | 1 | 1 | - | - | 1 | - | - | 1 |
| Additives | | PC content | 2.2 | 2.2 | 2.2 | 2.2 | 2.2 | 2.2 | 2.2 | 2.2 |
| | | AO content | 0.4 | 0.4 | 0.4 | 0.4 | 0.4 | 0.4 | 0.4 | 0.4 |
| Physical properties of the resin | | Weight-average molecular weight | 123,000 | 120,000 | 118,000 | 125,000 | 118,000 | 120,000 | 121,000 | 120,000 |
| | | Tg(°C) | 126 | 124 | 123 | 125 | 122 | 123 | 125 | 124 |
| | | 2% weight loss temperature (°C) | 335 | 330 | 315 | 321 | 322 | 316 | 331 | 332 |
| | | Residual maleimide (ppm) | Not detected | Not detected | 35 | 32 | 29 | 124 | 72 | 63 |
| Physical properties of the film | | $R_{in}/R_{th}$ (nm) | 0.8/1.1 | 0.7/0.6 | 0.9/0.2 | 1.0/0.7 | 1.2/0.8 | 0.7/0.7 | 0.8/-0.5 | 0.7/-0.4 |
| | | Haze (%) | 0.1 | 0.1 | 0.1 | 0.1 | 0.1 | 0.1 | 0.1 | 0.1 |
| | | Light transmittance (%) | 92.4 | 92.5 | 92.4 | 92.3 | 92.5 | 92.5 | 92.4 | 92.4 |
| | | Tensile strength (GPa) | 2.3 | 2.3 | 2.1 | 2.2 | 2.0 | 1.9 | 2.0 | 1.9 |
| | | Thermal expansion coefficient (ppm/°C) | 64 | 62 | 74 | 70 | 76 | 81 | 78 | 82 |

| Category | | Example 1 | Example 2 | Comp. Example 1 | Comp Example 2 | Comp Example 3 | Comp Example 4 | Comp Example 5 | Comp Example 6 |
|---|---|---|---|---|---|---|---|---|---|
| Physical properties of the polarizing plate | Single transmittance (% | 41.9 | 42.3 | 40.7 | 39.8 | 39.9 | 40.5 | 41.1 | 41.4 |
| | Polarization degree (%) | 99.998 | 99.997 | 99.989 | 99.985 | 99.988 | 99.990 | 99.994 | 99.991 |
| | Curl (mm) | 1.0 | 1.5 | 6.0 | 6.0 | 6.0 | 8.0 | 8.0 | 8.5 |

MMA: methyl methacrylate
AMS: alpha-methylstyrene
PMI: phenylmaleimide
CHMI: cyclohexylmaleimide
MA: methyl acrylate
PC: polycarbonate
AO: antioxidant

As shown in Table 1 and in comparison of Examples 1 to 2 with Comparative Examples 4 to 6, it may be confirmed that, when a copolymer is prepared by using phenylmaleimide instead of cyclohexylmaleimide, the generation of odors during the film extrusion is remarkably reduced since there is no residual maleimide due to a high reactivity of phenylmaleimide.

In addition, it may be confirmed that the resin films according to Examples 1 to 2 have a lower thermal expansion coefficient than those of Comparative Examples 1 to 6.

In addition, it may be known that the polarizing plates according to Examples 1 to 2 of the present invention have a remarkably low curl occurrence, a good single transmittance and a good polarization degree when comparing with Comparative Examples 1 to 6.

**Claims**

1. An optical film prepared from a resin composition comprising
   a copolymer formed by polymerizing an alkyl methacrylate-based monomer, a styrene-based monomer, a phenylmaleimide-based monomer and an alkyl acrylate-based monomer, and
   polycarbonate.

2. The optical film of claim 1, wherein a content of unreacted phenylmaleimide-based monomer which remains in the resin composition is 30ppm or less based on the total resin composition.

3. The optical film of claim 1, wherein the copolymer comprises, based on 100 parts by weight of the copolymer,
   70 to 98 parts by weight of alkyl methacrylate-based monomer;
   0.1 to 10 parts by weight of styrene-based monomer;
   1 to 15 parts by weight of phenylmaleimide-based monomer; and
   0.1 to 5 parts by weight of alkyl acrylate-based monomer.

4. The optical film of claim 1, wherein the weight ratio of phenylmaleimide-based monomer to alkyl acrylate-based monomer is 2:1 to 7:1.

5. The optical film of claim 1, wherein the alkyl methacrylate-based monomer is at least one selected from a group consisting of methyl methacrylate, ethyl methacrylate, isopropyl methacrylate, n-butyl methacrylate, t-butyl methacrylate, hydroxyethyl methacrylate, isobornyl methacrylate, and cyclohexyl methacrylate.

6. The optical film of claim 1, wherein the styrene-based monomer is at least one selected from a group consisting of styrene, $\alpha$-methylstyrene, p-bromostyrene, p-methylstyrene and p-chlorostyrene.

7. The optical film of claim 1, wherein the phenylmaleimide-based monomer is at least one selected from a group consisting of phenylmaleimide, nitrophenylmaleimide, monochlorophenylmaleimide, dichlorophenylmaleimide, monomethylphenylmaleimide, dimethylphenylmaleimide and ethylmethylphenylmaleimide.

8. The optical film of claim 1, wherein the alkyl acrylate-based monomer is at least one selected from a group consisting of methyl acrylate, ethyl acrylate, isopropyl acrylate n-butyl acrylate, t-butyl acrylate, cyclohexyl acrylate, isobornyl acrylate, hydroxymethyl acrylate and hydroxyethyl acrylate.

9. The optical film of claim 1, which has a glass transition temperature of 100°C to 150°C, as measured with a temperature increasing rate of 10°C/min by using a Differential Scanning Calorimetry (DSC).

10. The optical film of claim 1, which has a 2% weight loss temperature of 280°C or higher when determined by a thermogravimetric analyzer (TGA).

11. The optical film of claim 1, which has a thermal expansion coefficient of 50 to 100 ppm/°C, as measured by using a Thermomechanical Analyzer (TMA) at the temperature section between 40°C and 80°C at the temperature increasing rate of 10°C/min.

12. The optical film of claim 1, which an absolute value of the in-plane retardation ($R_{in}$) defined by the following [Equation 1] and an absolute value of the thickness-direction retardation ($R_{th}$) defined by the following [Equation 2] are the range of 5nm or less, respectively, in the wavelength of 550nm:

$$[\text{Equation 1}] \qquad R_{in} = (n_x - n_y) \times d$$

$$[\text{Equation 2}] \qquad R_{th} = (n_z - n_y) \times d$$

wherein,

$n_x$ is the highest one among the in-plane refractive indexes of the optical film,
$n_y$ is the refractive index perpendicular to the $n_x$ among the in-plain refractive indexes of the optical film,
$n_z$ is the thickness-direction refractive index of the optical film, and
d is the thickness of the film.

13. A polarizing plate comprising:

a polarizer; and
an optical film of claim 1, which is disposed on at least one side of the polarizer.

**Patentansprüche**

1. Optischer Film, hergestellt aus einer Harzzusammensetzung umfassend
ein Copolymer gebildet durch Polymerisieren eines Monomers auf Alkylmethacrylatbasis, eines Monomers auf Styrolbasis, eines Monomers auf Phenylmaleimidbasis und eines Monomers auf Alkylacrylatbasis, und Polycarbonat.

2. Optischer Film nach Anspruch 1, wobei ein Gehalt an nicht-umgesetztem Monomer auf Phenylmaleimidbasis, das in der Harzzusammensetzung verbleibt, 30 ppm oder weniger ist, basierend auf der gesamten Harzzusammensetzung.

3. Optischer Film nach Anspruch 1, wobei das Copolymer umfasst, basierend auf 100 Gewichtsteilen des Copolymers, 70 bis 98 Gewichtsteile Monomer auf Alkylmethacrylatbasis;
0,1 bis 10 Gewichtsteile Monomer auf Styrolbasis;
1 bis 15 Gewichtsteile Monomer auf Phenylmaleimidbasis; und
0,1 bis 5 Gewichtsteile Monomer auf Alkylacrylatbasis.

4. Optischer Film nach Anspruch 1, wobei das Gewichtsverhältnis von Monomer auf Phenylmaleimidbasis zu Monomer auf Alkylacrylatbasis 2:1 bis 7:1 ist.

5. Optischer Film nach Anspruch 1, wobei das Monomer auf Alkylmethyacrylatbasis wenigstens eines ist, ausgewählt aus einer Gruppe bestehend aus Methylmethacrylat, Ethylmethacrylat, Isopropylmethacrylat, n-Butylmethacrylat, t-Butylmethacrylat, Hydroxyethylmethacrylat, Isobornylmethacrylat und Cyclohexylmethacrylat.

6. Optischer Film nach Anspruch 1, wobei das Monomer auf Styrolbasis wenigstens eines ist, ausgewählt aus einer Gruppe bestehend aus Styrol, α-Methylstyrol, p-Bromstyrol, p-Methylstyrol und p-Chlorstyrol.

7. Optischer Film nach Anspruch 1, wobei das Monomer auf Phenylmaleimidbasis wenigstens eines ist, ausgewählt aus einer Gruppe bestehend aus Phenylmaleimid, Nitrophenylmaleimid, Monochlorphenylmaleimid, Dichlorphenylmaleimid, Monomethylphenylmaleimid, Dimethylphenylmaleimid und Ethylmethylphenylmaleimid.

8. Optischer Film nach Anspruch 1, wobei das Monomer auf Alkylacrylatbasis wenigstens eines ist, ausgewählt aus einer Gruppe bestehend aus Methylacrylat, Ethylacrylat, Isopropylacrylat, n-Butylacrylat, t-Butylacrylat, Cyclohexylacrylat, Isobornylacrylat, Hydroxymethylacrylat und Hydroxyethylacrylat.

9. Optischer Film nach Anspruch 1, der eine Glasübergangstemperatur von 100°C bis 150°C aufweist, wie gemessen mit einer Temperaturerhöhungsgeschwindigkeit von 10°C/min unter Verwendung einer Differentialscanningcalorimetrie (DSC).

**10.** Optischer Film nach Anspruch 1, der eine Temperatur für einen Gewichtsverlust von 2% von 280°C oder höher aufweist, wenn sie bestimmt wird durch einen thermogravimetrischen Analysator (TGA).

**11.** Optischer Film nach Anspruch 1, der einen thermischen Expansionskoeffizienten von 50 bis 100 ppm/°C aufweist, wie gemessen unter Verwendung eines thermomechanischen Analysators (TMA) bei dem Temperaturabschnitt zwischen 40°C und 8o°C bei der Temperaturerhöhungsgeschwindigkeit von 10°C/min.

**12.** Optischer Film nach Anspruch 1, wobei ein Absolutwert der In-plane-Retardation ($R_{in}$), definiert durch die folgende [Gleichung 1], und ein Absolutwert der Dickenrichtungretardation ($R_{th}$), definiert durch die folgende [Gleichung 2], der Bereich von 5 nm oder weniger bei der Wellenlänge von 550 nm sind:

$$[\text{Gleichung 1}] \qquad R_{in} = (n_x - n_y) \times d$$

$$[\text{Gleichung 2}] \qquad R_{th} = (n_z - n_y) \times d$$

wobei

$n_x$ der höchste unter den In-plane-Brechungsindizes des optischen Films ist,
$n_y$ der Brechungsindex senkrecht zu den $n_x$ unter den In-plane-Brechungsindizes des optischen Films ist,
$n_z$ der Dickenrichtungsbrechungsindex des optischen Films ist und
d die Dicke des Films ist.

**13.** Polarisationsplatte, umfassend:

einen Polarisator; und
einen optischen Film nach Anspruch 1, der auf wenigstens einer Seite des Polarisators angeordnet ist.

**Revendications**

**1.** Un film optique préparé à partir d'une composition de résine comprenant
un copolymère formé en polymérisant un monomère à base de méthacrylate d'alkyle, un monomère à base de styrène, un monomère à base de phénylmaléimide et un monomère à base d'acrylate d'alkyle et un polycarbonate.

**2.** Le film optique selon la revendication 1, dans lequel une teneur en monomère à base de phénylmaléimide n'ayant pas réagi qui reste dans la composition de résine est égale ou inférieure à 30 ppm sur la base de la composition de résine totale.

**3.** Le film optique selon la revendication 1, dans lequel le copolymère comprend, sur la base de 100 parties en poids du copolymère,
70 à 98 parties en poids de monomère à base de méthacrylate d'alkyle ;
0,1 à 10 parties en poids de monomère à base de styrène ;
1 à 15 parties en poids de monomère à base de phénylmaléimide ; et
0,1 à 5 parties en poids de monomère à base d'acrylate d'alkyle.

**4.** Le film optique selon la revendication 1, dans lequel le rapport de poids du monomère à base de phénylmaléimide au monomère à base d'acrylate d'alkyle est compris entre 2:1 et 7:1.

**5.** Le film optique selon la revendication 1, dans lequel le monomère à base de méthacrylate d'alkyle est au moins un élément choisi dans un groupe constitué de méthacrylate de méthyle, méthacrylate d'éthyle, méthacrylate d'isopropyle, méthacrylate de n-butyle, méthacrylate de t-butyle, méthacrylate d'hydroxyéthyle, méthacrylate d'isobornyle et méthacrylate de cyclohexyle.

**6.** Le film optique selon la revendication 1, dans lequel le monomère à base de styrène est au moins un élément choisi dans un groupe constitué de styrène, $\alpha$-méthylstyrène, p-bromostyrène, p-méthylstyrène et p-chlorostyrène.

7. Le film optique selon la revendication 1, dans lequel le monomère à base de phénylmaléimide est au moins un élément choisi dans un groupe constitué de phénylmaléimide, nitrophénylmaléimide, monochlorophénylmaléimide, dichlorophénylmaléimide, monométhylphénylmaléimide, diméthylphénylmaléimide et éthylméthylphénylmaléimide.

8. Le film optique selon la revendication 1, dans lequel le monomère à base d'acrylate d'alkyle est au moins un élément choisi dans un groupe constitué d'acrylate de méthyle, acrylate d'éthyle, acrylate d'isopropyle, acrylate de n-butyle, acrylate de t-butyle, acrylate de cyclohexyle, acrylate d'isobornyle, acrylate d'hydroxyméthyle et acrylate d'hydroxyéthyle.

9. Le film optique selon la revendication 1, qui a une température de transition vitreuse comprise entre 100°C et 150°C, mesurée avec une vitesse d'augmentation de température de 10°C/min en utilisant une calorimétrie différentielle à balayage (DSC).

10. Le film optique selon la revendication 1, qui a une perte de poids de 2% à une température égale ou supérieure à 280°C lors d'une détermination par un analyseur thermogravimétrique (TGA).

11. Le film optique selon la revendication 1, qui a un coefficient de dilatation thermique compris entre 50 et 100 ppm/°C, mesuré en utilisant un analyseur thermomécanique (TMA) à la section de température comprise entre 40°C et 80°C à la vitesse d'augmentation de la température de 10°C/min.

12. Le film optique selon la revendication 1, dont une valeur absolue de retard dans le plan ($R_{in}$) définie par l'Équation 1 ci-après et une valeur absolue du retard dans la direction de l'épaisseur ($R_{th}$) définie par l'Équation 2 ci-après sont égales ou inférieures à 5 nm, respectivement, dans la longueur d'onde de 550 nm :

$$[\text{Équation 1}] \quad R_{in} = (n_x - n_y) \times d$$

$$[\text{Équation 2}] \quad R_{th} \sim (n_z - n_y) \times d$$

dans lequel,

$n_x$ est la valeur la plus élevée parmi des indices de réfraction dans le plan du film optique,
$n_y$ est l'indice de réfraction perpendiculaire au $n_x$ parmi des indices de réfraction dans le plan du film optique,
$n_z$ est l'indice de réfraction dans la direction de l'épaisseur du film optique, et
d est l'épaisseur du film.

13. Une plaque de polarisation comprenant :

un polariseur ; et
un film optique selon la revendication 1, qui est disposé sur au moins un côté du polariseur.